(19) Europäisches Patentamt
European Patent Office
Office européen des brevets

(11) Numéro de publication : **0 286 465 B1**

(12) # FASCICULE DE BREVET EUROPEEN

(45) Date de publication du fascicule du brevet : **11.09.91 Bulletin 91/37**

(51) Int. Cl.$^5$ : **C01B 21/098**

(21) Numéro de dépôt : **88400525.7**

(22) Date de dépôt : **04.03.88**

(54) **Procédé de préparation de polychlorophosphazène en présence de bis(dichlorophosphoryl)imide.**

(30) Priorité : **10.03.87 FR 8703250**

(43) Date de publication de la demande : **12.10.88 Bulletin 88/41**

(45) Mention de la délivrance du brevet : **11.09.91 Bulletin 91/37**

(84) Etats contractants désignés : **AT BE CH DE ES FR GB GR IT LI LU NL SE**

(56) Documents cités :
**EP-A- 0 026 685**
**EP-A- 0 178 997**
**DIE MAKROMOLEKULARE CHEMIE, vol. 183, no. 5, mai 1982, pages 1137-1143, Heidelberg, DE; M. HELIOUI et al.: "Nouvelle préparation de polychlorophosphazènes linéaires"**

(73) Titulaire : **ATOCHEM**
**4 & 8, Cours Michelet La Défense 10**
**F-92800 Puteaux (FR)**

(72) Inventeur : **Pagniez, Guy**
**2, bois de l'Eglise**
**F-64230 Poey de Lescar (FR)**
Inventeur : **Passimourt, Nadine**
**5 Rue des Alliés**
**F-64000 Pau (FR)**
Inventeur : **Potin, Philippe**
**9 Rue des Pâquerettes**
**F-64140 Billere (FR)**

(74) Mandataire : **Rochet, Michel et al**
**ATOCHEM Département Propriété Industrielle**
**F-92091 Paris la Défense Cédex 42 (FR)**

**EP 0 286 465 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet un procédé de préparation de polychlorophosphazène.

On a décrit (brevet européen publié sous le n° 0026685) un procédé de préparation de polychlorophosphazènes linéaires par polycondensation de N(dichlorophosphoryl)trichlorophosphazène suivant le schéma :

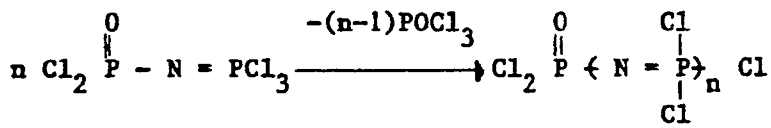


(1) (2)

Par comparaison avec le procédé antérieur décrit dans le brevet US 3.370.020 (qui utilise comme matière de départ l'hexachlorocyclotriphosphazène le procédé décrit dans le brevet européen précité permet d'obtenir des polymères non réticulés de masse moléculaire élevée, avec contrôle de la masse moléculaire au niveau désiré et mise en oeuvre d'un monomère facilement accessible.

Le procédé décrit dans ce brevet européen est généralement mis en oeuvre à une température pouvant être comprise entre 240 et 350°C, pendant une durée pouvant aller de 8 à plusieurs dizaines d'heures selon le niveau de masse moléculaire désiré.

L'invention propose un perfectionnement au procédé décrit dans le brevet européen précité. Plus précisément l'invention concerne un procédé de préparation de polychlorophosphazènes linéaires par polycondensation de N(dichlorophosphoryl)trichlorophosphazène, procédé selon lequel cette réaction de polycondensation est sensiblement accélérée.

Ce procédé est caractérisé en ce que tout ou partie de la réaction de polycondensation du N(dichlorophosphoryl)trichlorophosphazène est réalisée en présence de bis(dichlorophosphoryl)imide, de formule :

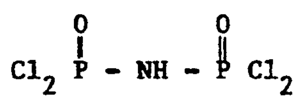

(3)

Le bis(dichlorophosphoryl)imide de formule (3) est en lui-même connu et ne constitue pas un objet de l'invention. Il a été décrit par exemple par L. RIESEL, H.H. PATZMANN, H.P. BARTICH dans Z. Anorg. Allg. Chem. t.404, page 219 (1974) et peut être obtenu dans une première étape d'hydrolyse du N(dichlorophosphoryl)trichlorophosphazène de formule (1). L'efficacité de ce produit en tant que catalyseur de polycondensation est, de ce fait, surprenante dans la mesure où cette réaction de polycondensation doit absolument se faire en l'absence d'humidité, celle-ci entraînant une réticulation du polychlorophosphazène.

Or le bis(dichlorophosphoryl)imide de formule (3) catalyse bien la polycondensation du monomère de formule (1) en polychlorophosphazènes essentiellement linéaires, par conséquent sans formation partielle ou totale d'un gel réticulé, insoluble et en général inutilisable, ce qui se produit lorsque le monomère de formule (1) se trouve en contact avec l'humidité, avant ou pendant la polycondensation.

La quantité de bis(dichlorophosphoryl)imide de formule (3) — quantité pouvant être introduite dans le réacteur de polycondensation en début ou en cours de polycondensation ou progressivement — est généralement supérieure à 0,05% molaire, par rapport au monomère soumis à la polycondensation. La quantité maximum d'imide dépend de divers facteurs, en particulier la valeur de masse moléculaire souhaitée, la réactivité propre du monomère (1), la température choisie pour la réaction de polycondensation. D'une manière générale, il est préférable de ne pas dépasser 1,5% molaire (par rapport au monomère de formule (1), étant admis qu'il appartiendra à l'homme du métier, à l'intérieur des valeurs extrêmes recommandées de choisir la quantité exacte de l'imide permettant d'obtenir, sans réticulation, la masse moléculaire désirée.

Le procédé conforme à l'invention tant au niveau de l'introduction du bis(dichlorophosphoryl)imide que de la réaction de polycondensation proprement dite peut être mis en oeuvre en solution, par exemple dans un hydrocarbure aromatique mono ou polycyclique chloré, tel que le trichlorobenzène ou le trichlorodiphényle.

S'agissant des conditions opératoires, on pourra suivre les indications générales et recommandées décrites dans le brevet européen 0026685 dont le contenu est incorporé présentement par référence. On pourra notamment suivre les indications de ce document concernant la durée de réaction, la température, la pression,

la possibilité de conduire la réaction successivement à des températures différentes et/ou à des pressions différentes. On pourra également se reporter à ce document au sujet du contrôle de la polycondensation et du traitement de purification du polychlorophosphazène obtenu. S'agissant de l'évolution de la polycondensation, on sait que la réaction s'accompagne de la libération de $POCl_3$ : de ce fait la vitesse de départ de $POCl_3$ est proportionnelle à la vitesse de croissance des chaînes macromoléculaires. L'intérêt du procédé conforme à l'invention est clairement mis en évidence en mesurant le temps nécessaire pour recueillir 80% en poids du $POCl_3$ théorique ($t_{80}$) — 100% correspondant à la libération de la totalité de $POCl_3$ et à l'obtention du polymère de formule 2 ayant la masse moléculaire désirée — en présence ou en l'absence de bis(dichlorophosphoryl)imide, ainsi qu'il apparaîtra à la lecture des exemples suivants, lesquels ne sont cependant donnés qu'à titre d'illustration et ne sauraient en aucun cas limiter l'invention.

EXEMPLES 1 A 3

1-/ Synthèse du bis(dichlorophosphoryl)imide

Cette préparation est effectuée par action de l'acide formique sur le N(dichlorophosphoryl)trichlorophosphazène en suivant le mode opératoire décrit par RIESEL et Coll., op. cit.

Le bis(dichlorophosphoryl)imide est ensuite dilué par du trichlorodiphényle de manière à obtenir une solution (S) contenant 4,994 g (0,0199 mole)/100 g de solution.

2-/ Polycondensation

Dans un réacteur agité, équipé d'un système de recette de $POCl_3$ et de pressurisation à l'azote on introduit a g de N(dichlorophosphoryl)trichlorophosphazène ($P_2NOCl_5$), b g de trichlorodiphényle et c g de la solution (S) décrite sous 1-/ ce qui donne un rapport molaire catalyseur/monomère de d. L'ensemble est chauffé à g°C. On mesure la quantité de $POCl_3$ en fonction du temps et note la durée nécessaire en heures pour recueillir 80% du $POCl_3$ théorique ($t_{80}$).

On arrête l'essai au bout de e fois $t_{80}$.

Après refroidissement, la solution de polychlorophosphazène formé est diluée par ajout de 500 $cm^3$ de benzène.

On introduit 10% de cette nouvelle solution dans un réacteur contenant 1,18 moles de phénate de sodium et 150 g de diglyme. Après distillation du benzène, le mélange est chauffé à 120°C pendant 48 h.

On ajoute 350 $cm^3$ de benzène et neutralise par HCl concentré. Le polymère et le chlorure de sodium sont essorés et lavés au benzène.

Le gateau obtenu est mis en suspension dans 10 fois son volume de méthanol puis essoré. On renouvelle l'opération avec un mélange méthanol/eau (80/20) puis avec de l'eau à 80°C.

Le polymère est dissous à chaud (60°C) dans 40 fois son volume de tétrahydrofurane (THF) puis filtré. La solution est concentrée jusqu'à obtention d'un sirop et versée lentement dans 1 $dm^3$ d'eau sous forte agitation.

Le précipité est essoré et séché sous pression réduite à 10 mm de mercure à 80°C.

Le polydiphénoxyphosphazène obtenu présente une viscosité intrinsèque de f ml/g (THF à 30°C).

Dans les tableaux qui suivent correspondant à des essais effectués avec deux lots de $P_2NOCl_5$, on indique les différentes valeurs de a, b, c, d, $t_{80}$, e, f et g pour les trois exemples conformes à l'invention (1, 2 et 3) ainsi que pour trois exemples comparatifs ($C_1$, $C_2$, $C_3$) effectués, soit sans bis(dichlorophosphoryl)imide, soit avec un rapport molaire

$$\frac{\text{catalyseur}}{\text{monomère}}$$

trop élevé.

1° Lot de monomère

| Exemples | a | b | c | d % | $t_{80}$ | e | f | g |
|---|---|---|---|---|---|---|---|---|
| 1 | 124 | 122,8 | 2,638 | 0,114 | 1,93 | 20 | 32 | 260 |
| 2 | 144 | 142,6 | 10,653 | 0,397 | 1,60 | 20 | 32 | 160 |
| $C_1$ | 133 | 131,7 | - | - | 3,22 | 20 | 42 | 260 |

2° Lot de monomère

| Exemples | a | b | c | d % | $t_{80}$ | e | f | g |
|---|---|---|---|---|---|---|---|---|
| 3 | 160 | 158,45 | 32,39 | 1,1 | 0,9 | 20 | 31,5 | 270 |
| $C_2$ | 138 | 136,66 | - | - | 2,08 | 20 | 35,5 | 270 |
| $C_3$ | 137 | 135,67 | 45,18 | 1,77 | 0,6 | 16,86 | GEL | 270 |

Il ressort de la lecture et de la comparaison des exemples 1 à 3 d'une part et $C_1$ à $C_3$ d'autre part que l'utilisation d'un bis(dichlorophosphoryl)imide permet de réduire la valeur de $t_{80}$, $t_{80}$ étant une valeur représentative de la réactivité, à tous les stades de la polycondensation. Il apparaît par ailleurs que le bis(dichlorophosphoryl)imide catalyse fortement la polycondensation, dans la mesure où l'emploi d'une quantité trop importante de bis(dichlorophosphoryl)imide peut conduire à la formation d'un gel insoluble ($C_3$).

## Revendications

1. Procédé de préparation de polychlorophosphazène linéaire par polycondensation de N(dichlorophosphoryl)trichlorophosphazène, caractérisé en ce que la réaction de polycondensation est effectuée, en tout ou partie, en présence de bis(dichlorophosphoryl)imide de formule :

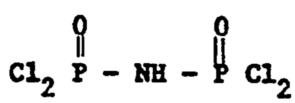

2. Procédé selon la revendication 1, caractérisé en ce que le bis(dichlorophosphoryl)imide est utilisé en quantité supérieure à 0,05% molaire par rapport au monomère soumis à la polycondensation.

3. Procédé selon l'une quelconque des revendications 1 ou 2, caractérisé en ce que le bis(dichlorophosphoryl)imide est utilisé en quantité n'excédant pas 1,5% molaire par rapport au monomère soumis à la polycondensation.

4. Procédé selon l'une quelconque des revendications 1 à 3, caractérisé en ce que le bis(dichlorophosphoryl)imide est introduit dans le milieu de polycondensation avant le commencement de celle-ci ou pendant la polycondensation ou progressivement.

## Patentansprüche

1. Verfahren zur Herstellung von geradkettigem Polychlorphosphazen durch Polykondensation von N-Dichlorphosphoryl-trichlorphosphazen, dadurch gekennzeichnet, daß die Polykondensationsreaktion ganz oder teilweise in Gegenwart von Bis(dichlorphosphoryl)imid der Formel

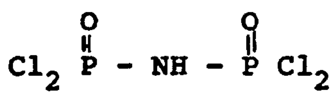

durchgeführt wird.

2. Verfahren nach Anspruch 1, dadurch gekennzeichnet, daß das Bis(dichlorphosphoryl)imid in einer Menge verwendet wird, die größer als 0,05 Mol%, bezogen auf das für die Polykondensation eingesetzte Monomere, ist.

3. Verfahren nach Anspruch 1 oder 2, dadurch gekennzeichnet, daß das Bis(dichlorphosphoryl)imid in einer Menge verwendet wird, die 1,5 Mol%, bezogen auf das für die Polykondensation eingesetzte Monomere, nicht übersteigt.

4. Verfahren nach einem der Ansprüche 1 bis 3, dadurch gekennzeichnet, daß das Bis(dichlorphosphoryl)-imid in das Polykondensationsmedium vor Beginn oder während der Polykondensation oder fortlaufend eingebracht wird.

## Claims

1. Process for the preparation of linear polychlorophosphazene by polycondensation of N-(dichlorophosphoryl)trichlorophosphazene, characterised in that the polycondensation reaction is carried out, wholly or partly, in the presence of bis(dichlorophosphoryl)imide of formula :

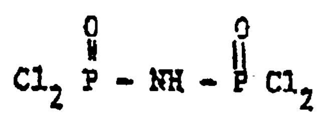

2. Process according to Claim 1, characterised in that bis(dichlorophosphoryl)imide is employed in a quantity of more than 0.05 mol% relative to the monomer subjected to the polycondensation.

3. Process according to either of Claims 1 and 2, characterised in that bis(dichlorophosphoryl)imide is employed in a quantity not exceeding 1.5 mol% relative to the monomer subjected to the polycondensation.

4. Process according to any one of Claims 1 to 3, characterised in that bis(dichlorophosphoryl)imide is introduced into the polycondensation mixture before or during the polycondensation or progressively.